# EUROPÄISCHE PATENTANMELDUNG

(11) **EP 4 309 922 A1**
(43) Veröffentlichungstag der Anmeldung: **24.01.2024**
(21) Anmeldenummer: 23183035.7
(22) Anmeldetag: 03.07.2023
(51) Int. Cl.: B60C 23/04

(54) **VERFAHREN ZUM ÜBERTRAGEN VON INFORMATIONEN ZU EINEM AN EINEM FAHRZEUGREIFEN ANGEORDNETEN REIFENMODUL**

(30) Priorität: 20.07.2022 DE 102022207413
(71) Anmelder: Continental Reifen Deutschland GmbH, 30165 Hannover (DE)
(72) Erfinder: James, Akhil, 30165 Hannover (DE); Sahlmüller, Baldo, 30165 Hannover (DE); Lehmann, Jörg, 30165 Hannover (DE); Nettelmann, Marc, 30165 Hannover (DE); Jaedicke, Jessica, 30165 Hannover (DE)
(74) Vertreter: Continental Corporation

(57) **Zusammenfassung**

Es wird ein Verfahren mit den folgenden Schritten vorgeschlagen:
a) Bereitstellen von mindestens einem Fahrzeugreifen (2) mit einem Reifenmodul (3),
wobei das Reifenmodul (3) einen Speicher zum Bereitstellen von Informationen und einen Drucksensor zum Erfassen eines Reifendruckes umfasst,
b) Montage des Fahrzeugreifens (2) mit dem Reifenmodul (3) an einer Reifenposition am Fahrzeug (1),
c) Direkte Übertragung von Informationen von einer außerhalb des Fahrzeuges (1) angeordneten Datenbank (7) auf den Speicher des Reifenmoduls,
wobei die Datenübertragung über eine Funkverbindung (8) erfolgt.

## Beschreibung

Die Erfindung betrifft ein Verfahren zum Übertragen von Informationen zu einem an einem Fahrzeugreifen angeordneten Reifenmodul.

Es ist bekannt, bei Fahrzeugreifen eine Reifendrucküberwachung einzusetzen, um einen Druckverlust sicher zu detektieren.
Eine Möglichkeit, eine Reifendrucküberwachung bei Fahrzeugen zu applizieren, besteht darin, die Fahrzeugreifen mit Reifenmodulen auszurüsten. Die Reifenmodule können u.a. einen Mikrocomputer umfassen, die mit einer Software für die Reifenrücküberwachung ausgestattet sind.

Der Erfindung lag die Aufgabe zugrunde, ein Verfahren bereitzustellen, mit dem auf einfache Weise eine Softwareaktualisierung erfolgen kann.
Außerdem soll mit dem Verfahren gewährleistet werden können, dass die Reifenmodule auf einfache Weise einzelnen Reifenpositionen zugeordnet werden können.

Gelöst wird die Aufgabe durch ein Verfahren mit den folgenden Schritten:
a) Bereitstellen von mindestens einem Fahrzeugreifen mit einem Reifenmodul, wobei das Reifenmodul einen Speicher zum Bereitstellen von Informationen und einen Drucksensor zum Erfassen eines Reifendruckes umfasst,
b) Montage des Fahrzeugreifens mit dem Reifenmodul an einer Reifenposition am Fahrzeugreifen,
c) Direkte Übertragung von Informationen von einer außerhalb des Fahrzeuges angeordneten Datenbank auf den Speicher des Reifenmoduls,
wobei die Datenübertragung über eine direkte Funkverbindung erfolgt.

Ein Vorteil der Erfindung ist darin zu sehen, dass mit dem Verfahren sichergestellt werden kann, dass auf einfache Weise eine Softwareaktualisierung am Reifenmodul erfolgen kann. Über eine Datenbank außerhalb des Fahrzeuges werden Daten über eine Funkverbindung zum Reifenmodul übertragen. Im Gegensatz zu herkömmlichen Systemen erfolgt die Softwareaktualisierung nicht über ein Steuergerät am Fahrzeug.
Ein weiterer Vorteil der Erfindung ist darin zu sehen, dass durch das erfindungsgemäße Verfahren eine einfache und sichere Zuordnung der Reifenmodule zu den einzelnen Reifenpositionen am Fahrzeug erfolgen kann.
Es werden Informationen zur Reifenposition direkt auf dem Speicher des Reifenmoduls übertragen. Beispielsweise umfasst die Information, dass das Reifenmodul in einem Fahrzeugreifen montiert ist, welches sich an der Vorderachse auf der rechten Position befindet.

In einer vorteilhaften Weiterbildung der Erfindung ist vorgesehen, dass bei der direkten Übertragung von Informationen von der Datenbank auf den Speicher des Reifenmoduls eine Softwareaktualisierung für Funktionen des Reifenmoduls erfolgt.
Die Softwareaktualisierung kann beispielsweise beinhalten, dass bestimmte Funktionen am Reifenmodul ein- oder ausgeschaltet werden.
Die Softwareaktualisierung kann z.B. das Anpassen oder die Aktivierung von einem RF-Protokoll umfassen, welches beispielsweise durch den Automobilhersteller vorgegeben wird.
Außerdem kann die Softwareaktualisierung die Aktivierung oder Deaktivierung von Übertragungsarten betreffen, wie z.B. die Übertragung mit Bluetooth, einem RF-Standard oder einem Mobilfunkstandard.
Die Softwareaktualisierung kann auch das Einstellen der Messfrequenz betreffen mit der das Reifenmodul in regemäßigen Zeitintervallen den Reifendruck misst. Die Softwareaktualisierung kann auch das Einstellen der Sendefrequenz betreffen mit der das Reifenmodul seine Daten zu einer Empfangseinheit sendet. Außerdem können mit der Softwareaktualisierung Reifendaten auf das Reifenmodul übertragen werden. Die Reifendaten können die Reifenposition am Fahrzeug, den Fahrzeugtyp und die Reifendimension umfassen.

In einer weiteren vorteilhaften Weiterbildung der Erfindung ist vorgesehen, dass die Softwareaktualisierung im Fahrtmodus des Fahrzeuges erfolgt.
Die Softwareaktualisierung muss nicht mehr in einer Fachwerkstatt durchgeführt werden.

In einer weiteren vorteilhaften Weiterbildung der Erfindung ist vorgesehen, dass auf dem Speicher des Reifenmoduls Informationen zur Reifenposition am Fahrzeug abgespeichert werden.
Bei der Erstausrüstung von Fahrzeugen erhält jedes Reifenmodul die Information mitgeteilt, an welcher Reifenposition am Fahrzeug das Reifenmodul montiert wurde.

In einer weiteren vorteilhaften Weiterbildung der Erfindung ist vorgesehen, dass die Informationen zur Reifenposition bei der Reifenmontage am Fahrzeug auf den Speicher des Reifenmoduls gespeichert werden.
Dadurch ist es nicht mehr notwendig, erst nach der Reifenmontage festzustellen, welches Reifenmodul an welchem Fahrzeugreifen angeordnet ist.

In einer weiteren vorteilhaften Weiterbildung der Erfindung ist vorgesehen, dass das Übertragen der Reifenpositionen zum Speicher des Reifenmoduls mit einem mobilen Endgerät erfolgt.
Das mobile Endgerät kann beispielsweise ein Smartphone oder ein Notebook sein.

In einer weiteren vorteilhaften Weiterbildung der Erfindung ist vorgesehen, dass die auf den Reifenmodulen abgespeicherten Reifenpositionen und/oder Reifendruckwerte über eine Funkverbindung direkt zu einer Anzeigevorrichtung im Fahrzeug übertragen werden.
Es ist kein Steuergerät mehr am Fahrzeug erforderlich, welches die Daten zu der Anzeigevorrichtung im Fahrzeug überträgt. Die Reifenpositionen am Anhänger können daher auch auf einfache Weise erkannt werden, wenn die Zugmaschine am Nutzfahrzeug gewechselt wird.

In einer weiteren vorteilhaften Weiterbildung der Erfindung ist vorgesehen, dass die auf den Reifenmodulen abgespeicherten Reifenpositionen und/oder Reifendruckwerte über eine Funkverbindung zu einer externen Datenbank außerhalb des Fahrzeuges übertragen werden.
Mit der externen Datenbank kann eine einfache automatische Weiterverarbeitung der Daten erfolgen.

In einer weiteren vorteilhaften Weiterbildung der Erfindung ist vorgesehen, dass die Informationen der Datenbank einem Flottenbetreiber bereitgestellt werden, wobei der Flottenbetreiber die Informationen zur Wartung der Fahrzeugreifen nutzt.
Der Flottenbetreiber erhält beispielsweise die Information, dass der Reifendruck an einem seiner Fahrzeuge zu gering ist und nachjustiert werden muss.

Anhand eines Ausführungsbeispiels wird die Erfindung im Folgenden näher beschrieben.
Es zeigt:

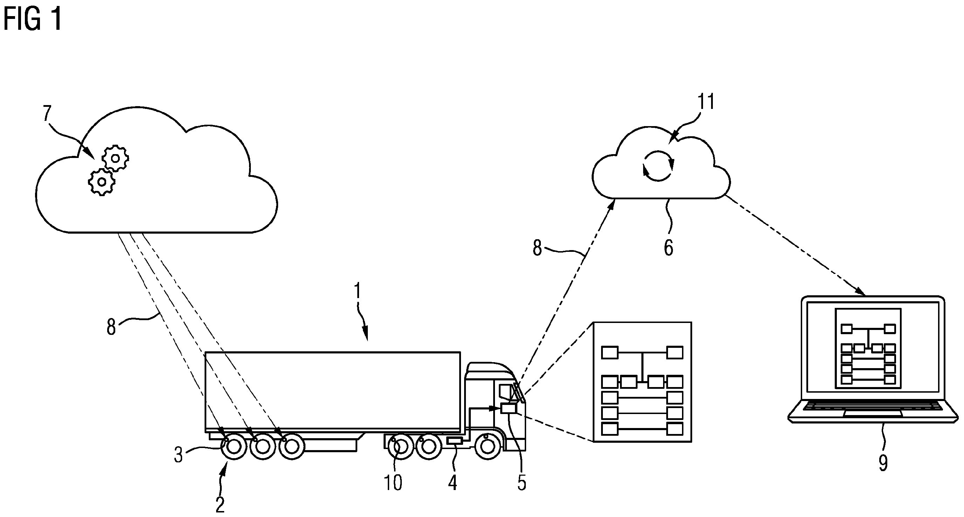

Fig. 1: Ein Nutzfahrzeug in der Seitenansicht.

Die Figur 1 zeigt ein Ausführungsbeispiel. Das Fahrzeug 1 ist ein Nutzfahrzeug mit einer Zugmaschine und einem Anhänger. Das Fahrzeug 1 weist eine Vielzahl von Fahrzeugreifen 2 auf, die jeweils mit einem Reifenmodul 3 oder 10 versehen sind. Die Reifenmodule sind bevorzugt auf der Reifeninnenseite befestigt und dienen u.a. dazu, den Reifendruck der Fahrzeugreifen zu überwachen.
Die Softwareaktualisierung für die Reifenmodule 3 oder 10 kann mit einer Datenbank 7 erfolgen, die sich in einer Cloud befindet. Die Softwareaktualisierung erfolgt über eine direkte Funkverbindung 8.
Es ist kein Umweg über ein Steuergerät 4 am Fahrzeug erforderlich. Die entsprechenden Daten werden direkt über die Verbindung 8 zu den Reifenmodulen 3 und 10 übertragen. Die Softwareaktualisierung kann auch im Fahrtmodus des Fahrzeuges erfolgen.

Es ist ebenfalls eine bidirektionale Übertragung zwischen den Reifenmodulen und der Datenbank 7 in der Cloud optional vorgesehen. Die Reifenmodule können dann z.B. die Rückmeldung zurück senden, dass die Softwareaktualisierung erfolgreich installiert wurde.
Weiterhin ist es möglich, mit dem neuen Verfahren die jeweiligen Reifenpositionen am Fahrzeug direkt auf dem Speicher der Reifenmodule abzuspeichern. Die entsprechende Konfiguration kann beispielsweise mit einem mobilen Endgerät erfolgen, der über eine bidirektionale Verbindung mit dem Reifenmodul kommunizieren kann. Bei der Erstausrüstung des Fahrzeuges wird beispielsweise auf das Reifemodul 3 die Information übertragen, dass es in einem Fahrzeugreifen 2 montiert wurde, welches sich an der vordersten Fahrzeugachse auf der rechten Position befindet. Die Reifenmodule der einzelnen Fahrzeugreifen übertragen ihre Daten über eine direkte Funkverbindung zu der Anzeigevorrichtung 5, die sich im Fahrerhaus der Zugmaschine befindet. Die Anzeigevorrichtung 5 zeigt alle Reifen des Fahrzeuges in einer Aufsicht mit den jeweiligen Reifenpositionen und den zugehörigen Reifendrücken an. Die Daten von der Anzeigevorrichtung können über eine direkte Funkverbindung 8 zu einer Datenbank 11 einer Cloud 6 übertragen werden. Anschließend können diese Daten automatisiert weiterverarbeitet werden und beispielsweise auf ein mobiles Endgerät 9 übertragen werden.
Mit dem mobilen Endgerät 9 hat beispielsweise ein Flottenbetreiber die Möglichkeit, den Reifendruck der Fahrzeugreifen zu überwachen.

### Bezugszeichenliste

- 1: Fahrzeug
- 2: Fahrzeugreifen
- 3: Reifenmodul
- 4: Steuergerät am Fahrzeug
- 5: Anzeigevorrichtung
- 6: Cloud
- 7: Datenbank
- 8: Kommunikation über Funkverbindung
- 9: Notebook beim Flottenbetreiber
- 10: Reifenmodul
- 11: Datenbank in der Cloud

## Patentansprüche

1. Verfahren zum Übertragen von Informationen zu einem an einem Fahrzeugreifen (2) angeordneten Reifenmodul (3) mit folgenden Schritten:
a) Bereitstellen von mindestens einem Fahrzeugreifen (2) mit einem Reifenmodul (3),
wobei das Reifenmodul (3) einen Speicher zum Bereitstellen von Informationen und einen Drucksensor zum Erfassen eines Reifendruckes umfasst,
b) Montage des Fahrzeugreifens (2) mit dem Reifenmodul (3) an einer Reifenposition am Fahrzeug (1),
c) Direkte Übertragung von Informationen von einer außerhalb des Fahrzeuges (1) angeordneten Datenbank (7) auf den Speicher des Reifenmoduls,
wobei die Datenübertragung über eine direkte Funkverbindung (8) erfolgt.

2. Verfahren nach Anspruch 1,
**dadurch gekennzeichnet, dass**
bei der direkten Übertragung von Informationen von der Datenbank auf den Speicher des Reifenmoduls (3) eine Softwareaktualisierung für Funktionen des Reifenmoduls (3) erfolgt.

3. Verfahren nach einem der vorhergehenden Ansprüche,
**dadurch gekennzeichnet, dass**
die Softwareaktualisierung im Fahrtmodus des Fahrzeuges (1) erfolgt.

4. Verfahren nach einem der vorhergehenden Ansprüche,
**dadurch gekennzeichnet, dass**
auf dem Speicher des Reifenmoduls (3) Informationen zur Reifenposition am Fahrzeug (1) abgespeichert werden.

5. Verfahren nach einem der vorhergehenden Ansprüche,
**dadurch gekennzeichnet, dass**
die Informationen zur Reifenposition bei der Reifenmontage am Fahrzeug (1) auf den Speicher des Reifenmoduls (3) gespeichert werden.

6. Verfahren nach einem der vorhergehenden Ansprüche,
**dadurch gekennzeichnet, dass**
das Übertragen der Reifenpositionen zum Speicher des Reifenmoduls (3) mit einem mobilen Endgerät erfolgt.

7. Verfahren nach einem der vorhergehenden Ansprüche,
**dadurch gekennzeichnet, dass**
die auf den Reifenmodulen (3) abgespeicherten Reifenpositionen und/oder Reifendruckwerte über eine Funkverbindung direkt zu einer Anzeigevorrichtung (5) im Fahrzeug übertragen werden.

8. Verfahren nach einem der vorhergehenden Ansprüche,
**dadurch gekennzeichnet, dass**
die auf den Reifenmodulen (3) abgespeicherten Reifenpositionen und/oder Reifendruckwerte über eine Funkverbindung (8) zu einer externen Datenbank (11) außerhalb des Fahrzeuges (1) übertragen werden.

9. Verfahren nach einem der vorhergehenden Ansprüche,
**dadurch gekennzeichnet, dass**
die Informationen der Datenbank (11) einem Flottenbetreiber bereit gestellt werden,
wobei der Flottenbetreiber die Informationen zur Wartung der Fahrzeugreifen nutzt.
